# EUROPEAN PATENT SPECIFICATION

(11) **EP 3 868 172 B1**
(45) Date of publication and mention of the grant of the patent: **27.09.2023**
(21) Application number: 18937172.7
(22) Date of filing: 18.10.2018
(51) Int. Cl.: H04W 88/00, H04N 13/332, H04W 88/06, H04W 88/10

(54) **DOCKING STATIONS TO WIRELESSLY ACCESS EDGE COMPUTE RESOURCES**
ANDOCKSTATIONEN FÜR DRAHTLOSEN ZUGRIFF AUF EDGE-COMPUTE-RESSOURCEN
STATIONS D'ACCUEIL POUR ACCÉDER SANS FIL À DES RESSOURCES DE CALCUL EN PÉRIPHÉRIE

(43) Date of publication of application: 25.08.2021
(73) Proprietor: HEWLETT-PACKARD DEVELOPMENT COMPANY, L.P., Spring, TX 77389 (US)
(72) Inventor: SWEET JR., Richard S., San Diego, CA 92127-1899 (US)
(74) Representative: Haseltine Lake Kempner LLP
(86) International application number: PCT/US2018/056434
(87) International publication number: WO 2020/081078

(56) References cited:
- WO-A1-2017/189321
- WO-A1-2018/022095
- WO-A1-2018/127461
- US-A1- 2014 235 169
- US-A1- 2015 296 545
- US-A1- 2015 372 707
- US-A1- 2016 085 713
- US-A1- 2018 020 320
- US-B1- 9 429 992
- US-B1- 9 429 992

## Description

### Background

Edge compute is rapidly emerging to replace traditional endpoint compute offered by notebook or workstation computers located directly in the work space. The endpoint compute devices can be replaced with smaller, lower cost/power thin client compute devices that have some degree of compute but serve to virtualize/utilize compute located at the network edge.

Relevant prior art disclosures considered are US 2018/020320 A1, US 9 429 992 B1, US 2015/296545 A1, US 2016/085713 A1, US2014/235169 A1.

### Summary of invention

The scope of the invention is defined by the appended claims.

### Brief Description of the Drawings

Figure 1 is a diagram illustrating a computing environment including a docking station according to one example.
Figure 2 is a block diagram illustrating elements of the docking station shown in Figure 1 according to one example.
Figure 3 is a block diagram illustrating elements of a docking station according to another example.
Figure 4 is a flow diagram illustrating a method for providing wireless access to edge compute resources using a docking station according to one example.

### Detailed Description

In the following detailed description, reference is made to the accompanying drawings which form a part hereof, and in which is shown by way of illustration specific examples in which the disclosure may be practiced. It is to be understood that other examples may be utilized and structural or logical changes may be made without departing from the scope of the present disclosure. The following detailed description, therefore, is not to be taken in a limiting sense, and the scope of the present disclosure is defined by the appended claims. It is to be understood that features of the various examples described herein may be combined, in part or whole, with each other, unless specifically noted otherwise.

For workstation class compute, a number of design appliances, such as a head mounted display (HMD), may utilize edge compute resources, in addition to a workstation class thin client device (like a 2-in-1 notebook device for example) in the same work space utilized by the same end user. This configuration may involve very low latency (e.g., less than 10ms) and high bandwidth (e.g., greater than 2Gbps) connectivity for a workstation class edge compute with an HMD and may not be supported by traditional wireless GigE Ethernet or even fiber connections when considering the bandwidth requirements for a multi user environment. HMD bandwidths alone can exceed 2 Gbps per user.

Examples disclosed herein are directed to a docking station for an edge computing environment. The docking station is a personal workspace edge compute gateway accessory. The docking station includes a first interface for connecting a thin client computing device to the docking station. The docking station includes a storage feature that provides storage and wireless charging of a HMD. The docking station includes a plurality of millimeter wave antennas to allow the thin client computing device, the HMD, and other connected devices, to wirelessly access edge compute resources with high bandwidth and low latency. At least one of the antennas may be a dual mode antenna that communicates using two different high bandwidth protocols (e.g., 5G and WiGig), which allows the thin client computing device and the HMD to share the same antenna and use different communication protocols. The docking station may route audio/video data from the edge compute resources directly to the HMD without first passing the data to the thin client computing device. The docking station may include a Quality of Service (QoS) module to optimize network link performance to the edge compute resources and perform other QoS functions.

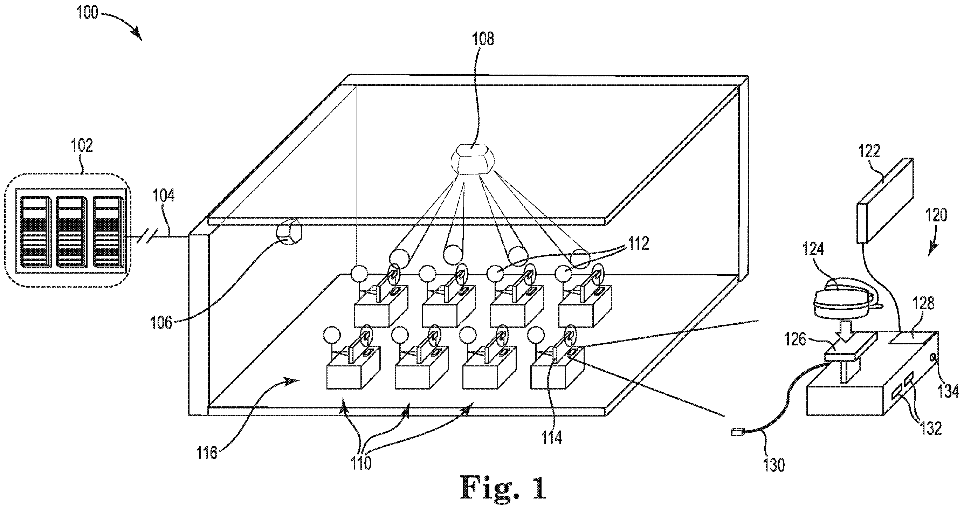

Figure 1 is a diagram illustrating a computing environment 100 including a docking station 120 according to one example. The computing environment 100 includes edge compute resources 102, gateway 106, reflectors 108, eight fixed computing locations 110, and docking station 120. The eight fixed computing locations 110 are located in a room 116, and each of the locations 110 includes a user 112 operating a thin client computing device 114. Gateway 106 and reflectors 108 are mounted on a ceiling of the room 116. In other environments, the fixed computing locations 110 may be in an open area, rather than a closed room, and the gateway 106 and reflectors 108 may be mounted on walls, ceilings, raised pole mounts, or other mounting locations.

Edge compute resources 102 may be a micro-data center located at a local or remote location. Gateway 106 may be a fixed wireless access (FWA) access point (AP) / gateway. Edge compute resources 102 are communicatively coupled to gateway 106 via communication link 104, which may be Ethernet, Fiber, or eCPRI (Common Public Radio Interface).

Docking station 120 includes external antennas 122, storage feature 126, internal antennas 128, USB client connector 130, USB ports 132, and power-in port 134. Storage feature 126 provides physical storage and wireless charging of wireless HMD 124. Storage feature 126 may also be used to provide physical storage and wireless charging of other devices. Docking station 120 may be communicatively coupled to any of the thin client computing devices 114 via USB client connector 130.

The docking station 120 includes a plurality of millimeter wave antennas 122 and 128 to allow a connected thin client computing device 114, the HMD 124, and other connected devices, to wirelessly access edge compute resources 102 with high bandwidth and low latency. At least one of the antennas 122 and 128 may be a dual mode antenna that communicates using two different high bandwidth protocols (e.g., 5G and WiGig), which allows the thin client computing device 114 and the HMD 124 to share the same antenna and use different communication protocols. The docking station 120 may route audio/video data from the edge compute resources 102 directly to the HMD 124 without first passing the data to the thin client computing device 114.

Reflectors 108 may include active and/or passive reflectors. Highly directional mmW signals are sent from gateway 106 to docking station 120 via reflectors 108, and highly directional mmW signals are sent from docking station 120 to gateway 106 via reflectors 108. Reflectors 108 are used to extend the range and redirect mmW signals to/from gateway 106 and docking station 120. Reflectors 108 can be used to provide signal diversity for both gateway 106 and docking station 120. Active ones of the reflectors 108 demodulate then modulate/amplify highly directional mmW signals to/from gateway 106 and docking station 120 to extend the range of the highly directional mmW signals. Passive ones of the reflectors 108 utilize electromagnetic structures/treatments of fixed size and dimensions designed to reflect the highly directional mmW signals to the desired gateway 106 and docking station 120.

Omnidirectional centimeter wave WiFi signals limit range, capacity and performance (user experience) due to access points and clients becoming interferers to each other. In contrast, the mmW frequencies used in computing environment 100 offer much different propagation characteristics. The mmW antennas 122 and 128 use highly directional antennas (spot beams) to focus energy. This focused energy allows a higher degree of spectral reuse and higher sustained throughput (better user experience) because each signal is isolated in spot beams and is not omnidirectional. Use of both passive and active reflectors 108 that focus and channel mmW signals can greatly enhance connectivity performance, quality of service and enable flexible wireless network topologies.

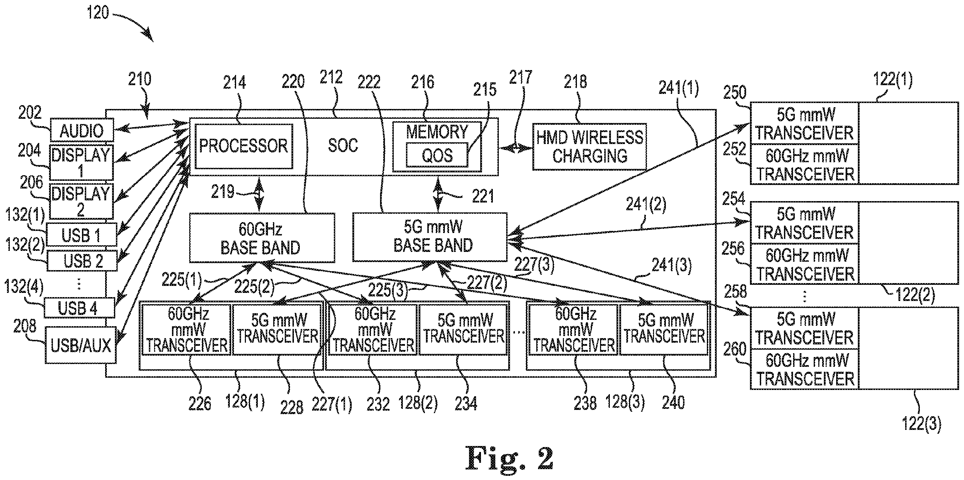

Figure 2 is a block diagram illustrating elements of the docking station 120 shown in Figure 1 according to one example. Docking station 120 includes audio port 202, display ports 204 and 206, USB ports 132(1)-132(4) (collectively referred to as USB ports 132), USB/AUX port 208, System on a Chip (SoC) 212, HMD wireless charging element 218, 60GHz to baseband converter 220, 5G millimeter wave (mmW) to baseband converter 222, internal antennas 128(1)-128(3) (collectively referred to as internal antennas 128), and external antennas 122(1)-122(3) (collectively referred to as external antennas 122). Ports 202, 204, 206, 132, and 208 are communicatively coupled to SoC 212 via communication links 210, and provide the docking station 120 with the ability to have wired connections to various types of devices.

An audio device may be connected to docking station 120 via audio port 202. Display devices may be connected to docking station 120 via display ports 204 and 206. Additional devices (e.g., USB human interface device (HID) class devices) may be connected to docking station 120 via USB ports 132 and USB/AUX port 208. In one example, USB client connector 130 (Figure 1) is a USB-C client connector that may be connected to any of the USB ports 132.

SoC 212 includes processor 214 and memory 216. Processor 214 includes a central processing unit (CPU) or another suitable processor. In one example, memory 216 stores machine readable instructions executed by processor 214 for operating the docking station 120. Memory 216 includes any suitable combination of volatile and/or non-volatile memory, such as combinations of Random Access Memory (RAM), Read-Only Memory (ROM), flash memory, and/or other suitable memory. These are examples of non-transitory computer readable storage media. The memory 216 is non-transitory in the sense that it does not encompass a transitory signal but instead is made up of at least one memory component to store machine executable instructions for performing techniques described herein.

HMD wireless charging element 218 is communicatively coupled to SoC 212 via communication link 217, and provides wireless charging of HMD 124 (Figure 1) when the HMD 124 is positioned in the storage feature 126 (Figure 1).

In one example, internal antenna 128(1) is a primary internal antenna, and antennas 128(2) and 128(3) are secondary/diversity internal antennas. Internal antenna 128(1) is coupled to 60GHz mmW transceiver 226 and 5G mmW transceiver 228. Internal antenna 128(2) is coupled to 60GHz mmW transceiver 232 and 5G mmW transceiver 234. Internal antenna 128(3) is coupled to 60GHz mmW transceiver 238 and 5G mmW transceiver 240. 60GHz mmW transceivers 226, 232, and 238 send and receive 60GHz signals to and from 60GHz to baseband converter 220 via communication links 225(1)-225(3), respectively. Converter 220 converts 60GHz signals to baseband signals, and converts baseband signals to 60GHz signals. Converter 220 sends demodulated baseband data to upper protocol layers hosted in the SoC 212 via communication link 219. 5G mmW transceivers 228, 234, and 240 send and receive 5G mmW signals to and from 5G mmW to baseband converter 222 via communication links 227(1)-227(3), respectively. Converter 222 converts the 5G mmW signals to baseband signals, and converts baseband signals to 5G mmW signals. Converter 522 sends demodulated baseband data to upper protocol layers hosted in the SoC 212 via communication link 221.

In one example, external antenna 122(1) is a primary external antenna, and antennas 122(2) and 122(3) are secondary/diversity external antennas. External antenna 122(1) is coupled to 5G mmW transceiver 250 and 60GHz mmW transceiver 252. External antenna 122(2) is coupled to 5G mmW transceiver 254 and 60GHz mmW transceiver 256. External antenna 122(3) is coupled to 5G mmW transceiver 258 and 60GHz mmW transceiver 260. 5G mmW transceivers 250, 254, and 258 send and receive 5G mmW signals to and from 5G mmW to baseband converter 222 via communication links 241(1)-241(3), respectively. 60GHz mmW transceivers 252, 256, and 260 send and receive 60GHz signals to and from 60GHz to baseband converter 220 via communication links (not shown to simplify the figure).

In the example illustrated in Figure 2, each of the antennas 122(1)-122(3) and 128(1)-128(3) is a dual mode antenna that communicates using two different high bandwidth protocols. Each of the antennas 122(1)-122(3) and 128(1)-128(3) includes a 60GHz mmW transceiver 226/232/238/252/256/260 for 60GHz communications using an 802.11ad (Wireless Gigabit Alliance or WiGig) communication protocol. Each of the antennas 122(1)-122(3) and 128(1)-128(3) also includes a 5G mmW transceiver 228/234/240/250/254/258 for communications at a 5G frequency (e.g., a frequency within the licensed 28-39GHz band, or within an unlicensed band). In one example, the HMD 124 uses at least one of the 60GHz mmW transceivers 226/232/238/252/256/260 of the docking station 120 to wirelessly communicate with the edge compute resources 102 using the WiGig communication protocol. The docking station 120 tethers the HMD 124 to the gateway 106 by way of the 60GHz WiGig communications. A thin client 114 connected to the docking station 120 may use at least one of the 5G mmW transceivers 228/234/240/250/254/258 to wirelessly communicate with the edge compute resources 102 using the 5G communication protocol. The HMD 124 and the thin client 114 may share the same antenna or use different antennas of the docking station 120. Other devices connected to the docking station 120 may use either the 5G mmW transceivers 228/234/240/250/254/258 or the 60GHz mmW transceivers 226/232/238/252/256/260.

In other examples, antennas 122(1)-122(3) and 128(1)-128(3) may include single mode antennas that include a single transceiver (e.g., either 60GHz mmW or 5G). In further examples, antennas 122(1)-122(3) and 128(1)-128(3) may include tri-mode antennas.

5G mmW communications, both licensed 28-39GHz and unlicensed 60GHz bands, have sufficiently low latency and bandwidth to support on premise connectivity for workstation class edge compute use cases and thus can replace wired Ethernet and WiFi access points that may be utilized for basic network connectivity. However, as with any wireless implementation, the client side may be up link limited due to physical design constraints. Transmit power and 5G radios/antennas can add cost and complexity to thin client devices.

Rather than burdening the thin clients 114 with additional cost and complexity of 5G radio/antennas, docking station 120 provides multiple antenna configurations (internal and external) for uplink and downlink performance parity. Docking station 120 serves to connect wireless HMD 124 to the edge compute resources 102, and provides interfaces for USB HID devices and monitors in the work-space. The docking station 120 enables a new class of Device as a Service (DaaS) / Hardware as a Service (HaaS) services to be offered with on premise 5G small cells. The docking station 120 serves as a docking apparatus and a 5G network gateway for edge compute access. Related to DaaS/HaaS, the docking station 120 provides low latency broadband connectivity for a workstation class thin client 114 and a wireless HMD 124 to edge compute resources 102 in a multi-user environment, without burdening the thin client 114 with 5G radios and antennas.

In the example illustrated in Figure 2, the docking station 120 includes QoS software 215 (e.g., stored in memory 216 and executed by processor 214) to dynamically optimize wireless network link performance to edge compute resources 102 in a multi-user environment, and to provide end user application policies and provisioning software for on premise network IT administrators. The real-time dynamic QoS software 215 helps ensure the user experience for operation of the HMD 124.

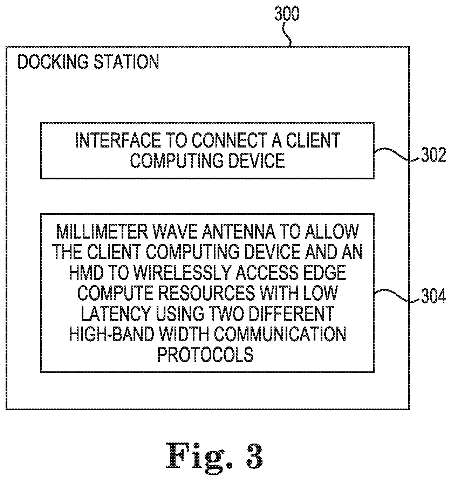

One example is directed to a docking station. Figure 3 is a block diagram illustrating elements of a docking station 300 according to another example. Docking station 300 includes a first interface 302 to connect a client computing device to the docking station 300. The docking station 300 includes at least one millimeter wave antenna 304 to allow the client computing device and a head mounted display (HMD) to wirelessly access edge compute resources with low latency using two different high-bandwidth communication protocols.

The docking station 300 may include a storage feature to provide physical storage and wireless charging of the HMD. The client computing device may be a thin client computing device. The at least one millimeter wave antenna 304 may include a dual mode millimeter wave antenna. The dual mode millimeter wave antenna may be shared by the client computing device and the HMD. A first one of the two different high-bandwidth communication protocols may be WiGig. A second one of the two different high-bandwidth communication protocols may be 5G. The docking station 300 may provide wireless access to the edge compute resources for the client computing device and the HMD with a low latency of less than 10ms, and a high bandwidth of greater than 2Gbps. The docking station 300 may route audio/video data from the edge compute resources directly to the HMD without passing the audio/video data to the client computing device. As an example, the HMD may be connected to the docking station 300 via a wireless IP address connection. The edge compute resources may render and encode the video/audio stream and encapsulate it in an IP stream to the docking station 300. The docking station 300 may have a separate addressed IP connection to the wireless HMD. The wireless HMD may receive the IP packets from the docking station 300 and then decode the encapsulated video/audio stream for the end user to view and listen to. The docking station 300 may further include a Quality of Service (Qos) module to optimize network link performance to the edge compute resources. The docking station 300 may further include a plurality of internal millimeter wave antennas and a plurality of external millimeter wave antennas.

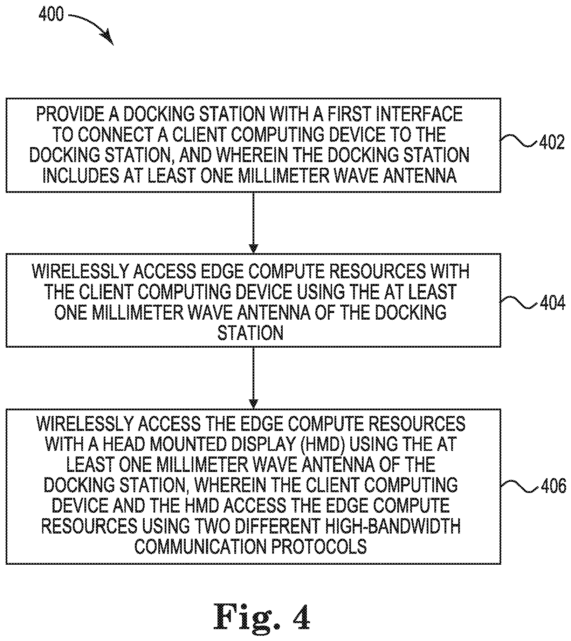

Another example is directed to a method for providing wireless access to edge compute resources using a docking station. Figure 4 is a flow diagram illustrating a method 400 for providing wireless access to edge compute resources using a docking station according to one example. At 402 in method 400, a docking station with a first interface to connect a client computing device to the docking station is provided, and wherein the docking station includes at least one millimeter wave antenna. At 404, edge compute resources are wirelessly accessed with the client computing device using the at least one millimeter wave antenna of the docking station. At 406, the edge compute resources are wirelessly accessed with a head mounted display (HMD) using the at least one millimeter wave antenna of the docking station, wherein the client computing device and the HMD access the edge compute resources using two different high-bandwidth communication protocols. The method 400 may further include routing, with the docking station, audio/video data from the edge compute resources directly to the HMD without passing the audio/video data to the client computing device.

Yet another embodiment is directed to a docking station, which includes a plurality of interfaces to connect a plurality of devices to the docking station. The docking station includes at least one internal millimeter wave antenna and at least one external millimeter wave antenna to allow the plurality of devices and a head mounted display (HMD) to wirelessly access edge compute resources using a plurality of different high-bandwidth communication protocols. The docking station may route audio/video data from the edge compute resources directly to the HMD without passing the audio/video data to any of the plurality of devices.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims.

## Claims

1. A docking station (120, 300), comprising:
a first interface (302) to connect a client computing device to the docking station (120, 300); and
at least one millimeter wave antenna (304) to allow the client computing device and a head mounted display, HMD (124), to wirelessly access edge compute resources (102) with latency of less than 10ms using two different high-bandwidth communication protocols with a bandwidth of greater than 2Gbps.

2. The docking station (120, 300) of claim 1, further comprising:
a storage feature (126) to provide physical storage and wireless charging of the HMD (124).

3. The docking station (120, 300) of claim 1, wherein the client computing device is a thin client computing device (114).

4. The docking station (120, 300) of claim 1, wherein the at least one millimeter wave antenna (304) includes a dual mode millimeter wave antenna (304).

5. The docking station (120, 300) of claim 4, wherein the dual mode millimeter wave antenna (304) is shared by the client computing device and the HMD (124).

6. The docking station (120, 300) of claim 1, wherein a first one of the two different high-bandwidth communication protocols is WiGig.

7. The docking station (120, 300) of claim 6, wherein a second one of the two different high-bandwidth communication protocols is 5G.

8. The docking station (120, 300) of claim 1, wherein the docking station (120, 300) routes audio/video data from the edge compute resources (102) directly to the HMD (124) without passing the audio/video data to the client computing device.

9. The docking station (120, 300) of claim 1, further comprising a Quality of Service, Qos, module to optimize network link performance to the edge compute resources (102).

10. The docking station (120, 300) of claim 1, further comprising a plurality of internal millimeter wave antennas and a plurality of external millimeter wave antennas.

11. A method, comprising:
providing a docking station (120, 300) with a first interface (302) to connect a client computing device to the docking station (120, 300), and wherein the docking station (120, 300) includes at least one millimeter wave antenna (304);
wirelessly accessing edge compute resources (102) with the client computing device using the at least one millimeter wave antenna (304) of the docking station (120, 300); and
wirelessly accessing the edge compute resources (102) with a head mounted display, HMD (124), using the at least one millimeter wave antenna (304) of the docking station (120, 300), wherein the client computing device and the HMD (124) access the edge compute resources (102) using two different high-bandwidth communication protocols with a bandwidth of greater than 2Gbps.

12. The method of claim 11, and further comprising:
routing, with the docking station (120, 300), audio/video data from the edge compute resources (102) directly to the HMD (124) without passing the audio/video data to the client computing device.

13. The docking station (120, 300) of claim 1, further comprising:
a plurality of interfaces to connect a plurality of devices to the docking station (120, 300); and
at least one internal millimeter wave antenna (304) and at least one external millimeter wave antenna (304) to allow the plurality of devices and the head mounted display, HMD (124), to wirelessly access edge compute resources (102) using a plurality of different high-bandwidth communication protocols.

14. The docking station (120, 300) of claim 13, wherein the docking station (120, 300) routes audio/video data from the edge compute resources (102) directly to the HMD (124) without passing the audio/video data to any of the plurality of devices.

## Patentansprüche

1. Andockstation (120, 300), die umfasst:
eine erste Schnittstelle (302), um eine Client-Rechenvorrichtung mit der Andockstation (120, 300) zu verbinden;
mindestens eine Millimeterwellenantenne (304), um es der Client-Rechenvorrichtung und einer an einem Kopf angebrachten Anzeige, HMD (124), zu ermöglichen, mit einer Latenz von weniger als 10 ms unter Verwendung von zwei verschiedenen Kommunikationsprotokollen mit hoher Bandbreite mit einer Bandbreite von mehr als 2 Gbps auf die Edge-Rechenressourcen (102) drahtlos zuzugreifen.

2. Andockstation (120, 300) nach Anspruch 1, die ferner umfasst:
ein Speichermerkmal (126), um einen physischen Speicher und ein drahtloses Aufladen der HMD (124) bereitzustellen.

3. Andockstation (120, 300) nach Anspruch 1, wobei die Client-Rechenvorrichtung eine Thin-Client-Rechenvorrichtung (114) ist.

4. Andockstation (120, 300) nach Anspruch 1, wobei die mindestens eine Millimeterwellenantenne (304) eine Dualmodus-Millimeterwellenantenne (304) einschließt.

5. Andockstation (120, 300) nach Anspruch 4, wobei die Dualmodus-Millimeterwellenantenne (304) durch die Client-Rechenvorrichtung und die HMD (124) gemeinsam genutzt wird.

6. Andockstation (120, 300) nach Anspruch 1, wobei ein erstes der zwei verschiedenen Kommunikationsprotokolle mit hoher Bandbreite WiGig ist.

7. Andockstation (120, 300) nach Anspruch 6, wobei ein zweites der zwei verschiedenen Kommunikationsprotokolle mit hoher Bandbreite 5G ist.

8. Andockstation (120, 300) nach Anspruch 1, wobei die Andockstation (120, 300) Audio-/Videodaten von den Edge-Rechenressourcen (102) direkt zu der HMD (124) leitet, ohne die Audio-/Videodaten an die Client-Rechenvorrichtung weiterzuleiten.

9. Andockstation (120, 300) nach Anspruch 1, die ferner ein Modul für Dienstgüte, Qos, umfasst, um eine Netzwerkverbindungsleistung zu den Edge-Ressourcen (102) zu optimieren.

10. Andockstation (120, 300) nach Anspruch 1, die ferner eine Vielzahl interner Millimeterwellenantennen und eine Vielzahl externer Millimeterwellenantennen umfasst.

11. Verfahren, das umfasst:
Bereitstellen einer Andockstation (120, 300) mit einer ersten Schnittstelle (302), um eine Client-Rechenvorrichtung mit der Andockstation (120, 300) zu verbinden, wobei die Andockstation (120, 300) mindestens eine Millimeterwellenantenne (304) einschließt;
drahtloses Zugreifen auf Edge-Rechenressourcen (102) mit der Client-Rechenvorrichtung unter Verwendung der mindestens einen Millimeterwellenantenne (304) der Andockstation (120, 300);
drahtloses Zugreifen auf die Edge-Rechenressourcen (102) mit einer an einem Kopf angebrachten Anzeige, HMD (124), unter Verwendung der mindestens einen Millimeterwellenantenne (304) der Andockstation (120, 300), wobei die Client-Rechenvorrichtung und die HMD (124) unter Verwendung von zwei verschiedenen Kommunikationsprotokollen mit hoher Bandbreite und einer Bandbreite von mehr als 2 Gbps auf die Edge-Rechenressourcen (102) zugreifen.

12. Verfahren nach Anspruch 11, und das ferner umfasst:
Leiten, mit der Andockstation (120, 300), von Audio-/Videodaten von den Edge-Rechenressourcen (102) direkt zu der HMD (124), ohne die Audio-/Videodaten an die Client-Rechenvorrichtung weiterzuleiten.

13. Andockstation (120, 300) nach Anspruch 1, die ferner umfasst:
eine Vielzahl von Schnittstellen, um eine Vielzahl von Vorrichtungen mit der Andockstation (120, 300) zu verbinden; und
mindestens eine interne Millimeterwellenantenne (304) und mindestens eine externe Millimeterwellenantenne (304), um es der Vielzahl von Vorrichtungen und der an einem Kopf angebrachten Anzeige, HMD (124), zu ermöglichen, unter Verwendung einer Vielzahl von verschiedenen Kommunikationsprotokollen mit hoher Bandbreite auf die Edge-Rechenressourcen (102) drahtlos zuzugreifen.

14. Andockstation (120, 300) nach Anspruch 13, wobei die Andockstation (120, 300) Audio-/Videodaten von den Edge-Rechenressourcen (102) direkt zu der HMD (124) leitet, ohne die Audio-/Videodaten an eine der Vielzahl von Vorrichtungen weiterzuleiten.

## Revendications

1. Station d'accueil (120, 300), comprenant :
une première interface (302) pour connecter un dispositif informatique client à la station d'accueil (120, 300) ; et
au moins une antenne à onde millimétrique (304) pour permettre au dispositif informatique client et à un visiocasque, HMD (124), d'accéder sans fil à des ressources de calcul de bord (102) avec une latence inférieure à 10 ms à l'aide de deux protocoles de communication à bande passante élevée différents avec une largeur de bande supérieure à 2 Gbps.

2. Station d'accueil (120, 300) selon la revendication 1, comprenant en outre :
une caractéristique de stockage (126) pour fournir un stockage physique et une charge sans fil du HMD (124).

3. Station d'accueil (120, 300) selon la revendication 1, dans laquelle le dispositif informatique client est un dispositif informatique client léger (114).

4. Station d'accueil (120, 300) selon la revendication 1, dans laquelle l'au moins une antenne à onde millimétrique (304) comporte une antenne à onde millimétrique à double mode (304).

5. Station d'accueil (120, 300) selon la revendication 4, dans laquelle l'antenne à onde millimétrique à double mode (304) est partagée par le dispositif informatique client et le HMD (124).

6. Station d'accueil (120, 300) selon la revendication 1, dans laquelle un premier des deux protocoles de communication à bande passante élevée différents est WiGig.

7. Station d'accueil (120, 300) selon la revendication 6, dans laquelle un second des deux protocoles de communication à bande passante élevée différents est 5 G.

8. Station d'accueil (120, 300) selon la revendication 1, dans laquelle la station d'accueil (120, 300) achemine des données audio/vidéo provenant des ressources de calcul de bord (102) directement au HMD (124) sans passer les données audio/vidéo au dispositif informatique client.

9. Station d'accueil (120, 300) selon la revendication 1, comprenant en outre un module de qualité de service, Qos, pour optimiser la performance de liaison réseau aux ressources de calcul de bord (102).

10. Station d'accueil (120, 300) selon la revendication 1, comprenant en outre une pluralité d'antennes à ondes millimétriques internes et une pluralité d'antennes à ondes millimétriques externes.

11. Procédé, comprenant :
la fourniture d'une station d'accueil (120, 300) avec une première interface (302) permettant de connecter un dispositif informatique client à la station d'accueil (120, 300), et dans lequel la station d'accueil (120, 300) comporte au moins une antenne à onde millimétrique (304) ;
l'accès sans fil à des ressources de calcul de bord (102) avec le dispositif informatique client à l'aide de l'au moins une antenne à onde millimétrique (304) de la station d'accueil (120, 300) ; et
l'accès sans fil aux ressources de calcul de bord (102) avec un visiocasque, HMD (124), à l'aide de l'au moins une antenne à onde millimétrique (304) de la station d'accueil (120, 300), dans lequel le dispositif informatique client et le HMD (124) accèdent aux ressources de calcul de bord (102) à l'aide de deux protocoles de communication à bande passante élevée différents avec une largeur de bande supérieure à 2 Gbps.

12. Procédé selon la revendication 11, et comprenant en outre :
l'acheminement, avec la station d'accueil (120, 300), des données audio/vidéo provenant des ressources de calcul de bord (102) directement au HMD (124) sans passer les données audio/vidéo au dispositif informatique client.

13. Station d'accueil (120, 300) selon la revendication 1, comprenant en outre :
une pluralité d'interfaces pour connecter une pluralité de dispositifs à la station d'accueil (120, 300) ; et
au moins une antenne à onde millimétrique interne (304) et au moins une antenne à onde millimétrique externe (304) pour permettre à la pluralité de dispositifs et au visiocasque, HMD (124), d'accéder sans fil à des ressources de calcul de bord (102) à l'aide d'une pluralité de protocoles de communication à bande passante élevée différents.

14. Station d'accueil (120, 300) selon la revendication 13, dans laquelle la station d'accueil (120, 300) achemine des données audio/vidéo provenant des ressources de calcul de bord (102) directement au HMD (124) sans passer les données audio/vidéo à l'un quelconque de la pluralité de dispositifs.
